# EUROPÄISCHE PATENTSCHRIFT

(11) **EP 3 914 813 B1**
(45) Veröffentlichungstag und Bekanntmachung des Hinweises auf die Patenterteilung: **13.03.2024**
(21) Anmeldenummer: 20701022.4
(22) Anmeldetag: 16.01.2020
(51) Int. Cl.: F01N 3/28, F01N 13/18, F01N 3/021

(54) **VORRICHTUNG MIT REINIGUNGSVORRICHTUNG ZUR HERSTELLUNG EINER ABGASNACHBEHANDLUNGSVORRICHTUNG**
DEVICE WITH CLEANING DEVICE FOR PRODUCING AN EXHAUST GAS AFTERTREATMENT DEVICE
DISPOSITIF COMPRENANT UN DISPOSITIF DE NETTOYAGE SERVANT À LA FABRICATION D'UN DISPOSITIF DE RETRAITEMENT DE GAZ D'ÉCHAPPEMENT

(30) Priorität: 24.01.2019 DE 102019101694
(43) Veröffentlichungstag der Anmeldung: 01.12.2021
(73) Patentinhaber: VOLKSWAGEN AKTIENGESELLSCHAFT, 38440 Wolfsburg (DE)
(72) Erfinder: BEHNER, Attila, 34131 Kassel (DE); GIEßLER, Michael, 34327 Körle (DE)
(74) Vertreter: Bungartz, Florian
(86) Internationale Anmeldenummer: PCT/EP2020/050999
(87) Internationale Veröffentlichungsnummer: WO 2020/152019

(56) Entgegenhaltungen:
- WO-A1-99/32215
- DE-A1- 10 327 668
- DE-A1-102007 002 376
- DE-A1-102008 024 331

## Beschreibung

Die Erfindung betrifft eine Vorrichtung zum Einschieben einer Einheit, die ein Abgasnachbehandlungselement sowie eine das Abgasnachbehandlungselement umfangsseitig umgebende, flexible Lagerungsmatte umfasst, in einen Aufnahmeraum eines Gehäuses einer Abgasnachbehandlungsvorrichtung. Die Erfindung betrifft weiterhin ein entsprechendes Verfahren zur Herstellung einer Abgasnachbehandlungsvorrichtung unter Verwendung einer solchen Einschiebevorrichtung.

Eine Abgasnachbehandlungsvorrichtung, beispielsweise ein Katalysator oder ein Partikelfilter, wie er in einem Abgasstrang einer für den Antrieb eines Kraftfahrzeugs vorgesehenen Brennkraftmaschine vorgesehen ist, umfasst üblicherweise ein Abgasnachbehandlungselement in Form eines feinporigeren Durchströmungskörpers, der innerhalb eines Gehäuses der Abgasnachbehandlungsvorrichtung weitgehend unbeweglich angeordnet ist. Ein solches Abgasnachbehandlungselement ist regelmäßig aus Metall oder aus Keramik ausgebildet. Insbesondere bei Abgasnachbehandlungsvorrichtungen, deren Abgasnachbehandlungselemente aus Keramik ausgebildet sind, sind diese üblicherweise unter Zwischenanordnung von Fasermatten in den dazugehörigen Gehäusen angeordnet. Diese flexiblen Fasermatten dienen u.a. dazu, die während der Nutzung der Abgasnachbehandlungsvorrichtung auftretenden thermischen Ausdehnungen der Abgasnachbehandlungselemente einerseits und der Gehäuse andererseits, die aufgrund der unterschiedlichen Materialien (Keramiken für die Monolithe einerseits und Metalle, insbesondere Stahl, für die Gehäuse andererseits) stark unterschiedlich ausfallen können, zu kompensieren.

Zur Herstellung einer solchen Abgasnachbehandlungsvorrichtung kann es vorgesehen sein, eine bereits vormontierte Einheit, die das Abgasnachbehandlungselement sowie die dieses umgebende Fasermatte umfasst, mittels einer Einschiebevorrichtung in das zumindest an einem Ende noch offene, d. h. nicht mit einem Einlass- oder Auslasstrichter versehene Gehäuse einzuschieben. Dabei wird die Fasermatte in radialer Richtung in einem definierten Maße komprimiert, um diese in einem komprimierten Zustand innerhalb des Gehäuses aufzunehmen, wodurch einerseits eine weitgehend unbewegliche Anordnung des Abgasnachbehandlungselements innerhalb des Gehäuses und andererseits auch eine ausreichende geringe Durchströmbarkeit der Fasermatte für durch die Abgasnachbehandlungsvorrichtung zu führendes Abgas (das möglichst ausschließlich durch das Abgasnachbehandlungselement geführt werden soll) realisiert werden kann. Diese radiale Deformation der Fasermatten kann mittels eines sich entsprechend konisch verjüngenden Führungskanals eines Führungsgehäuse, das Teil der Einschiebevorrichtung ist, realisiert werden. Das Führungsgehäuse wird dazu derart benachbart zu dem Gehäuse der Abgasnachbehandlungsvorrichtung, in die die Einheit aus Abgasnachbehandlungselement und Fasermatte eingeschoben werden soll, positioniert, dass eine Ausgangsöffnung des Führungskanals in Überdeckung mit einer Eingangsöffnung eines für die Aufnahme der Einheit vorgesehenen Aufnahmeraums des Gehäuses der Abgasnachbehandlungsvorrichtung angeordnet ist. Mittels eines Stempels der Einschiebevorrichtung wird dann die Einheit über den Führungskanal bis in den Aufnahmeraum des Gehäuses der Abgasnachbehandlungsvorrichtung geschoben. Ein solches Verfahren ist in der DE 10 2008 005 752 A1 beschrieben.

Ein Problem, das bei der Durchführung eines solchen Verfahrens auftreten kann, liegt darin, dass während des Einschiebens das Abgasnachbehandlungselement, an dem sich der Stempel abstützt, relativ zu der Fasermatte verrutscht, was dazu führen kann, dass die dabei hergestellte Abgasnachbehandlungsvorrichtung qualitativ als Fehlerteil einzuordnen ist.

Die DE 10 2008 024 331 A1 und die WO 99/32215 A1 offenbaren jeweils eine Vorrichtung gemäß dem Oberbegriff des Patentanspruchs 1.

Die DE 103 27 668 A1 beschreibt ein Verfahren zum Umwickeln eines Monolithen mit einer Lagermatte, wobei diese Einheit anschließend in ein Katalysatorgehäuse eingeschoben werden soll. Hierzu wird der Monolith mittels Stempeln in ein Wickelgehäuse geschoben und dort durch Drehung des Monolithen und durch ein tangentiales Zuführen der Lagermatte umwickelt. Anschließend wird die Einheit aus Monolith und Lagermatte in ein zweiteiliges, zu öffnendes Gehäuse geschoben, in der zwei Sicherungsringe in entsprechenden Nuten aufgenommen sind. Mittels dieser Sicherungsringe wird die Lagermatte an dem Monolithen gesichert. Diese Einheit wird anschließend mittels einer nicht konkretisierten Vorrichtung in ein Katalysatorgehäuse eingeschoben.

Die DE 10 2007 002 376 A1 offenbart eine Vorrichtung zum Einschieben einer Einheit, die ein Abgasnachbehandlungselement und eine dieses umgebende Lagerungsmatte umfasst und die zum Einschieben in ein Gehäuse vorgesehen ist.

Der Erfindung lag die Aufgabe zugrunde, bei einem Verfahren zur Herstellung einer Abgasnachbehandlungsvorrichtung gemäß der DE 10 2008 005 752 A1 ein Verrutschen des Abgasnachbehandlungselements relativ zu der Fasermatte zu vermeiden.

Diese Aufgabe wird mittels eines Verfahrens gemäß dem Patentanspruch 9 gelöst. Ein solches Verfahren beruht dabei auf der Verwendung einer Einschiebevorrichtung gemäß dem Patentanspruch 1. Vorteilhafte Ausgestaltungsformen der erfindungsgemäßen Einschiebevorrichtung und bevorzugte Ausführungsformen des erfindungsgemäßen Verfahrens sind Gegenstände der weiteren Patentansprüche und/oder ergeben sich aus der nachfolgenden Beschreibung der Erfindung.

Der Erfindung liegt die Erkenntnis zu Grunde, dass bei einem Einschieben einer Einheit, die ein Abgasnachbehandlungselement sowie eine das Abgasnachbehandlungselement umfangsseitig (vorzugsweise vollumfänglich) umgebende, flexible Lagerungsmatte umfasst, in einen Aufnahmeraum eines Gehäuses einer Abgasnachbehandlungsvorrichtung ein ungewolltes Verschieben des Abgasnachbehandlungselements relativ zu der Lagerungsmatte darin begründet sein kann, dass die Wandung eines Führungskanals eines Führungsgehäuse, über den die Einheit in den Aufnahmeraum eingeschoben wird, durch die dabei auftretende Reibung zwischen dieser Wandung und der Lagerungsmatte mit Abrieb verschmutzt wird. Wird das Führungsgehäuse, wie üblich, zur Herstellung einer Vielzahl von Abgasnachbehandlungsvorrichtungen verwendet, führt eine zunehmende Verschmutzung der Wandung des Führungskanals dazu, dass irgendwann der Reibungskoeffizient, der in dem Kontakt zwischen der Wandung des Führungskanals und einer Lagerungsmatte vorliegt, größer wird als der Reibungskoeffizient, der in dem Kontakt zwischen der Lagerungsmatte und dem dazugehörigen, darin üblicherweise nur lose aufgenommenen Abgasnachbehandlungselement vorliegt, was dann zu dem ungewollten Verrutschen des Abgasnachbehandlungselements relativ zu der Lagerungsmatte führt. Durch eine regelmäßige Reinigung der Wandung des Führungskanals kann diese Problematik vermieden werden, wobei eine solche Reinigung vorzugsweise automatisch erfolgen sollte, um den zeitlichen Aufwand und die Unterbrechung des Herstellungsprozesses, den eine manuelle Reinigung mit sich bringen würde, zu vermeiden.

Dementsprechend ist erfindungsgemäß eine Vorrichtung zum Einschieben einer Einheit, die ein Abgasnachbehandlungselement sowie eine das Abgasnachbehandlungselement umfangsseitig umgebende, flexible und insbesondere elastische Lagerungsmatte umfasst, in einen Aufnahmeraum eines Gehäuses einer Abgasnachbehandlungsvorrichtung vorgesehen. Die Einschiebevorrichtung umfasst dabei zum einen ein Führungsgehäuse mit einem Führungskanal, der eine Ausgangsöffnung aufweist, die zur Anordnung in Überdeckung mit einer Eingangsöffnung des Aufnahmeraums des Gehäuses der Abgasnachbehandlungsvorrichtung vorgesehen und dafür entsprechend eingerichtet ist. Weiterhin umfasst die Vorrichtung einen Stempel, mittels dessen die Einheit durch den Führungskanal und bis in den Aufnahmeraum des Gehäuses der Abgasnachbehandlungsvorrichtung schiebbar ist beziehungsweise geschoben werden kann. Weiterhin umfasst die Einschiebevorrichtung eine Reinigungsvorrichtung, die für eine Reinigung der Wandung des Führungskanals vorgesehen und eingerichtet ist.

Die Reinigungsvorrichtung einer erfindungsgemäßen Einschiebevorrichtung umfasst ein die Wandung des Führungskanals (vorzugsweise vollumfänglich) kontaktierendes Abstreifelement, das insbesondere in Form eines Abstreifrings ausgebildet sein kann. Dadurch kann auf konstruktiv einfache Weise eine wirkungsvolle Reinigung der Wandung des Führungskanals von Abrieb realisiert werden. Besonders bevorzugt kann dieses Abstreifelement ein textiles Flächen- oder Raumgebilde (d.h. ein Gewebe, eine Maschenware oder, vorzugsweise, ein Vlies) umfassen. Ein Vorteil eines solchen textilen Gebildes liegt u.a. in seiner guten Reinigungswirkung, die nicht nur darin begründet ist, dass von einem solchen textilen Gebilde Abriebpartikel wirkungsvoll mitgenommen werden, sondern diese zudem von dem textilen Gebilde absorbiert beziehungsweise in die Textilstruktur eingelagert werden. Mittels eines solchen textilen Abstreifelements werden Abriebpartikel daher nicht lediglich auf der Wandung des Führungskanals verschoben, wodurch sich diese insbesondere bei der Umkehrung der Bewegungsrichtung des Stempels ansammeln und auf der Wandung verbleiben könnten, sondern diese werden von dem textilen Gebilde absorbiert und dadurch die Wandung des Führungskanals wirkungsvoll gereinigt.

Ein erfindungsgemäßes Verfahren zur Herstellung einer Abgasnachbehandlungsvorrichtung umfasst das Einschieben der Einheit, die das Abgasnachbehandlungselement sowie die das Abgasnachbehandlungselement umfangsseitig umgebende Lagerungsmatte umfasst, in den Aufnahmeraum des Gehäuses der Abgasnachbehandlungsvorrichtung mittels einer erfindungsgemäßen Vorrichtung.

Der Führungskanal des Führungsgehäuses einer erfindungsgemäßen Einschiebevorrichtung kann vorzugsweise im Querschnitt kreisförmig sein, wobei auch andere Querschnittsformen, wie beispielsweise oval oder eckig (dann üblicherweise mit abgerundeten Ecken) vorgesehen sein können. Weiterhin bevorzugt kann vorgesehen sein, dass der Führungskanal in Richtung seiner Ausgangsöffnung zulaufend, d. h. mit sich (vorzugsweise kontinuierlich) verkleinernder Öffnungsquerschnittsfläche, ausgebildet ist. Dies kann in vorteilhafter Weise dazu dienen, die flexible Lagerungsmatte, die beispielsweise eine Faserstruktur aufweisen kann, kontinuierlich während des Schiebens der Einheit durch den Führungskanal außenseitig bis zum Erreichen von Außenabmessungen zu deformieren, die den Abmessungen der Eingangsöffnung des Aufnahmeraums des Gehäuses der Abgasnachbehandlungsvorrichtung entsprechen. Diese Deformation der Lagerungsmatte, die in dem Gehäuse der Abgasnachbehandlungsvorrichtung zumindest teilweise aufrechtgehalten wird, kann insbesondere dazu dienen, das vorzugsweise ansonsten lose in der Lagerungsmatte aufgenommene Abgasnachbehandlungselement weitgehend unbeweglich innerhalb des Gehäuses der Abgasnachbehandlungsvorrichtung zu positionieren und zudem eine ausreichende geringe Gasdurchlässigkeit der Lagerungsmatte zu erreichen.

Bei dem Abgasnachbehandlungselement kann es sich vorzugsweise um einen gasdurchlässigen Durchströmungskörper handeln, der insbesondere monolithisch ausgebildet sein kann. Der Durchströmungskörper kann insbesondere katalytisch für bestimmte Bestandteile des Abgases wirken und/oder entsprechend katalytisch beschichtet sein. Der Durchströmungskörper kann alternativ oder zusätzlich hinsichtlich des Größenbereichs seiner Poren beziehungsweise Durchströmungsöffnungen für eine Filterung von (ggf. bestimmten) Partikeln des Abgases ausgelegt sein.

Gemäß einer bevorzugten Ausgestaltungsform einer erfindungsgemäßen Einschiebevorrichtung ist vorgesehen, dass die Reinigungsvorrichtung dem Stempel zugeordnet ist, so dass zumindest ein Teil davon mit dem Stempel mitbewegt wird. Dadurch kann insbesondere eine automatische Reinigungsfunktion als direkte Folge eines Hubs des Stempels und insbesondere bei jedem Hub des Stempels realisiert werden.

Gemäß einer bevorzugten Weiterbildung einer solchen erfindungsgemäßen Einschiebevorrichtung kann vorgesehen sein, dass die Reinigungsvorrichtung oder zumindest der mit dem Stempel mitbewegte Teil davon bezüglich der Einschieberichtung, d.h. bezüglich der zu dem Gehäuse der Abgasnachbehandlungsvorrichtung weisenden Bewegungsrichtung des Stempels, hinter dem Stempel angeordnet ist. Dadurch wird eine konstruktiv einfache und damit vorteilhafte Zuordnung der Reinigungsvorrichtung zu dem Stempel realisiert.

Gemäß einer weiterhin bevorzugten Ausgestaltungsform einer erfindungsgemäßen Einschiebevorrichtung kann die Reinigungsvorrichtung eine Dosiervorrichtung zum Ausbringen eines Reinigungs- und/oder Schmiermittels umfassen. Das vorzugsweise flüssige Reinigung- und/oder Schmiermittel kann dabei vorzugsweise direkt oder indirekt auf die Wandung des Führungskanals aufgebracht werden. Das Reinigung- und/oder Schmiermittel kann einerseits ein Ablösen von Abrieb von der Wandung des Führungskanals verbessern und/oder durch das Ausbilden eines Gleitfilms einen relativ geringen Reibungskoeffizienten in dem Kontakt zwischen der Lagerungsmatte und der Wandung des Führungskanals bewirken.

Bei der Verwendung einer solchen erfindungsgemäßen Einschiebevorrichtung im Rahmen eines erfindungsgemäßen Verfahrens kann vorgesehen sein, dass das Reinigungs- und/oder Schmiermittel nur während eines Einschiebehubs des Stempels oder nur während eines Rückhubs des Stempels oder sowohl während des Einschiebehubs als auch während des Rückhubs des Stempels ausgebracht wird.

Weiterhin kann bevorzugt vorgesehen sein, dass die vorzugsweise vorgesehene Dosiervorrichtung dazu eingerichtet ist, das Reinigungs- und/oder Schmiermittel in das textile Gebilde einzubringen beziehungsweise, bei einem flüssigen Reinigungs- und/oder Schmiermittel, dass das textile Gebilde mit dem Reinigungs- und/oder Schmiermittel getränkt wird. Die Durchlässigkeit des textilen Gebildes wird folglich auf einfache und gleichzeitig wirkungsvolle Weise zur Verteilung und zur gleichmäßigen Dosierung des Reinigungs- und/oder Schmiermittels beim Aufbringen auf die Wandung des Führungskanals genutzt.

Bei einer erfindungsgemäßen Einschiebevorrichtung, bei der die Reinigungsvorrichtung eine Dosiervorrichtung zum Ausbringen eines Reinigungs- und/oder Schmiermittels umfasst, kann weiterhin bevorzugt vorgesehen sein, dass die Reinigungsvorrichtung zudem eine stationäre Zuführvorrichtung für das Reinigungs- und/oder Schmiermittel aufweist, die in mindestens einer definierten Stellung des Stempels fluidleitend mit der Dosiervorrichtung verbunden ist, während dies in mindestens einer anderen definierten Stellung nicht der Fall ist. Demnach kann vorgesehen sein, dass der Dosiervorrichtung nur zeitweise im Betrieb der Einschiebevorrichtung Reinigungs- und/oder Schmiermittel zugeführt wird. Vorzugsweise kann dies in einer Stellung des Stempels erfolgen, in der die bereits mit dem Stempel in Kontakt gebrachte Einheit aus Abgasnachbehandlungselement und Lagerungsmatte zumindest noch teilweise außerhalb des Führungskanals angeordnet ist. Dabei kann vorgesehen sein, dass das Reinigungs- und/oder Schmiermittel nur dann mittels der Dosiervorrichtung ausgebracht wird, wenn diese mit der Zuführvorrichtung fluidleitend verbunden ist. Bevorzugt ist jedoch vorgesehen, dass bei einer solchen fluidleitenden Verbindung zwischen der Zuführvorrichtung und der Dosiervorrichtung eine definierte Menge an Reinigungs- und/oder Schmiermittel in die Dosiervorrichtung übertragen wird, die anschließend nach und nach auf die Wandung des Führungskanals übertragen wird.

Gemäß einer bevorzugten Ausgestaltungsform einer erfindungsgemäßen Einschiebevorrichtung weist das Führungsgehäuse eine Mehrzahl von radial bezüglich der Längsachse des Führungskanals (und damit radial bezüglich der Bewegungsrichtungen des Stempels) beweglich und insbesondere verschiebbar gelagerten Gehäuseabschnitten auf. Dadurch wird eine einfache Anpassung der Vorrichtung an unterschiedlich dimensionierte Abgasnachbehandlungsvorrichtungen, die unter Verwendung der Vorrichtung hergestellt werden sollen, ermöglicht.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die Erfindung wird nachfolgend anhand eines in den Zeichnungen dargestellten Ausführungs- und Ausgestaltungsbeispiels näher erläutert. In den Zeichnungen zeigt:
- Fig. 1:: eine erfindungsgemäße Einschiebevorrichtung in einer ersten Funktionsstellung im Rahmen der Durchführung eines erfindungsgemäßen Verfahrens;
- Fig. 2:: die Einschiebevorrichtung in einer zweiten Funktionsstellung;
- Fig. 3:: die Einschiebevorrichtung in einer dritten Funktionsstellung; und
- Fig. 4:: in isolierter Darstellung das Führungsgehäuse der Einschiebevorrichtung.

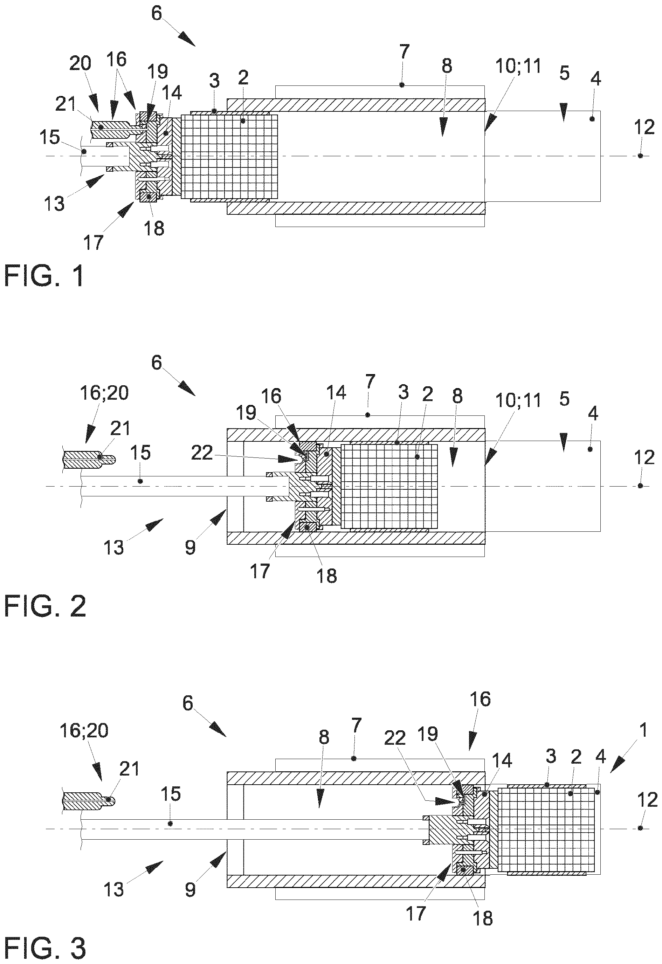

Die Fig. 1 bis 3 zeigen in verschiedenen Funktionsstellungen eine erfindungsgemäße Einschiebevorrichtung 6, die im Rahmen der Herstellung einer Abgasnachbehandlungsvorrichtung 1 zum Einsatz kommt.

Die Herstellung der Abgasnachbehandlungsvorrichtung 1 umfasst das Einschieben einer Einheit, die ein Abgasnachbehandlungselement 2 sowie eine das Abgasnachbehandlungselement 1 umfangsseitig umgebende, flexible Lagerungsmatte 3 umfasst, in einen Aufnahmeraum 5 eines rohrförmigen Gehäuses 4 der Abgasnachbehandlungsvorrichtung 1. Für das Einschieben wird eine erfindungsgemäße Einschiebevorrichtung 6 verwendet, die ein Führungsgehäuse 7 aufweist, das einen geradlinig verlaufenden, durchgehenden Führungskanal 8 ausbildet, der sich zwischen einer Eingangsöffnung 9 und einer Ausgangsöffnung 10 erstreckt. Die Ausgangsöffnung 10 des Führungskanals 8 ist, direkt angrenzend, in Überdeckung mit einer Eingangsöffnung 11 des Aufnahmeraums 5 des Gehäuses 4 der Abgasnachbehandlungsvorrichtung 1 angeordnet, wobei die Öffnungsflächen der Ausgangsöffnung 10 des Führungskanals 8 und der Eingangsöffnung 11 des Aufnahmeraums 5 identisch, d.h. gleich groß und von gleicher Formgebung, sind. Weiterhin ist in dieser für die bestimmungsgemäße Verwendung vorgesehenen Anordnung der Einschiebevorrichtung 6 die Längsachse 12 des Führungskanals 8 des Führungsgehäuses 7 koaxial zu der Längsachse 12 des ebenfalls kanalförmigen und geradlinig verlaufenden Aufnahmeraums 5 des Gehäuses 4 ausgerichtet.

Die Einschiebevorrichtung 6 umfasst weiterhin einen Stempel 13 mit einem Stempelkopf 14, der für eine direkte Anlage an der distal bezüglich des Gehäuses 4 der Abgasnachbehandlungsvorrichtung 1 angeordneten Stirnseite des Abgasnachbehandlungselements 2 vorgesehen ist und der über eine Stempelstange 15 mit einer in den Zeichnungen nicht dargestellten Vorschubvorrichtung, beispielsweise in Form eines hydraulischen oder pneumatischen Zylinders, verbunden ist. Dabei kann die Stempelstange 15 selbst die Kolbenstange eines solchen Zylinders darstellen.

Mittels des Stempels 13 kann die Einheit aus Abgasnachbehandlungselement 2 und Lagerungsmatte 3 über den Führungskanal 8 bis zu einer vorgesehenen Endposition innerhalb des Aufnahmeraums 5 des Gehäuses 4 der Abgasnachbehandlungsvorrichtung 1 geschoben werden, wie dies in den Fig. 1 und 2 in Zwischenpositionen und in der Fig. 3 in der Endposition für die Einheit dargestellt ist.

Infolge einer geringfügig zulaufenden, konkret konischen Ausbildung des Führungskanals 8 wird die flexible Lagerungsmatte 3 radial deformiert beziehungsweise komprimiert, wodurch diese trotz eines entsprechenden Übermaßes der Einheit problemlos in den Aufnahmeraum 5 des Gehäuses 4 der Abgasnachbehandlungsvorrichtung 1 eingebracht werden kann. Innerhalb des Aufnahmeraums 5 ist die Lagerungsmatte 3 dabei weiterhin in einem komprimierten Zustand angeordnet, wodurch eine weitgehend unbewegliche Fixierung des Abgasnachbehandlungselements 2 innerhalb des Gehäuses 4 sowie eine ausreichend geringe Gasdurchlässigkeit der aus einer Faserstruktur bestehenden Lagerungsmatte 3 realisiert wird. Unter anderem infolge dieser zunehmenden Kompression der Lagerungsmatte 3 bei der Bewegung durch den Führungskanal 8 und der daraus resultierenden relativ hohen Flächenpressung im Kontakt mit der Wandung des Führungskanals 8 ist die Bewegung der Einheit aus Abgasnachbehandlungselements 2 und Lagerungsmatte 3 mit einer relevanten Erzeugung von Abrieb von insbesondere dem Material der Lagerungsmatte 3 verbunden, wodurch die Wandung des Führungskanals 8 im Laufe der Nutzung der Einschiebevorrichtung 6 zur Herstellung einer Vielzahl von Abgasnachbehandlungsvorrichtungen 1 zunehmend verschmutzt. Dadurch kann der im Kontakt zwischen der Lagerungsmatte 3 und der Wandung des Führungskanals 8 vorliegende Reibungskoeffizient größer als der im Kontakt zwischen der Lagerungsmatte 3 und dem Abgasnachbehandlungselement 2 vorliegende Reibungskoeffizient werden, was dann zu einem Verschieben des Abgasnachbehandlungselements 2 innerhalb der Lagerungsmatte 3 führen würde. Die dabei hergestellte Abgasnachbehandlungsvorrichtung 1 könnte dann aufgrund nicht erreichter Qualitätsanforderungen ein Fehlerteil darstellen, das gegebenenfalls ausgesondert werden müsste.

Um dies zu vermeiden umfasst die erfindungsgemäße Einschiebevorrichtung 6 weiterhin eine Reinigungsvorrichtung 16, die einerseits ein bezüglich der Einschieberichtung hinter dem Stempelkopf 14 angeordnetes und mit diesem direkt kontaktierendes und verbundenes, ringscheibenförmiges Abstreifelement 17 umfasst. Dieses Abstreifelement 17 umfasst, eingebettet in dessen Mantelfläche, einen die Wandung des Führungskanals 3 kontaktierenden Vliesring 18, der bei einer Bewegung des Stempelkopfes 14 und damit auch des Abstreifelements 17 durch den Führungskanal 8 an dessen Wandung anhaftende Abriebpartikel mitnimmt und durch Einlagerung in dessen textile Struktur absorbiert. Dadurch wird die Wandung des Führungskanals 8 gereinigt.

Die Reinigungsvorrichtung 16 umfasst weiterhin eine in das Abstreifelement 17 integrierte Dosiervorrichtung 19 in Form von Dosierkanälen, mittels der ein Reinigungs- und/oder Schmiermittel in den Vliesring 18 eingebracht werden kann. Das in dem Vliesring 18 zwischengespeicherte Reinigungs- und/oder Schmiermittel wird dann bei einer Bewegung des Vliesrings 18 durch den Führungskanal 8 nach und nach auf dessen Wandung übertragen, wo dieses ein Ablösen von Abriebpartikeln von der Wandung unterstützt und/oder den Reibungskoeffizienten im Kontakt der Lagerungsmatte 3 mit der Wandung des Führungskanals 8 verringert.

Die Reinigungsvorrichtung 16 umfasst zudem eine Zuführvorrichtung 20 für das Reinigungs- und/oder Schmiermittel, die beispielsweise über eine Pumpe (nicht dargestellt) an einen Tank (nicht dargestellt) für das Reinigungs- und/oder Schmiermittel angebunden ist. Die Zuführvorrichtung 20 umfasst einen Zuführstutzen 21, der mit einem dazu passenden Anschlussstutzen 22 der Dosiervorrichtung 19 in eine fluidleitende Verbindung gebracht werden kann, um der Dosiervorrichtung 19 Reinigungs- und/oder Schmiermittel zuzuführen.

Bei dem dargestellten Ausgestaltungsbeispiels ist vorgesehen, dass eine solche fluidleitende Verbindung lediglich zeitweise, konkret in einem Anfangsabschnitt des Einschiebehubs des Stempels 13 vorgesehen ist. Der Zuführstutzen 21 der Zuführvorrichtung 20 ist dabei ebenfalls ein Stück weit parallel zu der Bewegungsachse des Stempels 13 (diese entspricht der Längsachse 12 des Führungskanals 8) bewegbar (vgl. Fig. 1 und Fig. 2), um auch ohne längerfristige Unterbrechung der Stempelbewegung eine für jeden Bewegungszyklus (Einschiebe- und Rückhub) des Stempels 13 ausreichende Menge des Reinigungs- und/oder Schmiermittels in die Dosiervorrichtung 19 übertragen zu können.

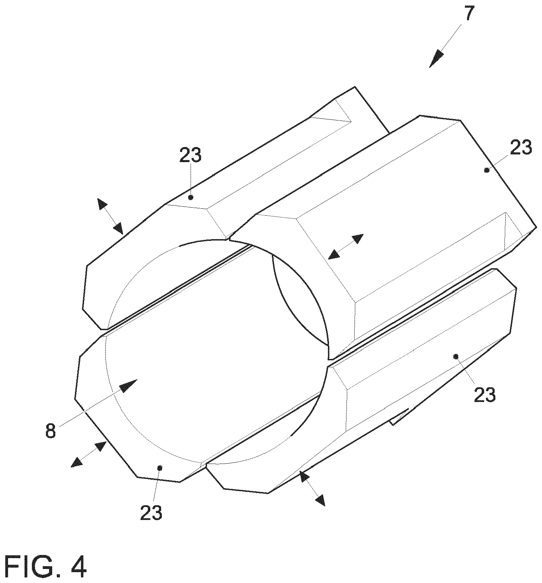

In der Fig. 4 ist noch gezeigt, dass das Führungsgehäuse 7 der Einschiebevorrichtung 6 eine Mehrzahl von radial bezüglich der Längsachse 12 des Führungskanals 8 beweglich und konkret verschiebbar gelagerten Gehäuseabschnitten 23 umfasst. Dadurch wird eine einfache Anpassung der Einschiebevorrichtung 6 an unterschiedlich dimensionierte Abgasnachbehandlungsvorrichtungen 1, die unter Verwendung der Einschiebevorrichtung 6 hergestellt werden sollen, ermöglicht.

### BEZUGSZEICHENLISTE

- 1: Abgasnachbehandlungsvorrichtung
- 2: Abgasnachbehandlungselement
- 3: Lagerungsmatte
- 4: Gehäuse der Abgasnachbehandlungsvorrichtung
- 5: Aufnahmeraum des Gehäuses
- 6: Einschiebevorrichtung
- 7: Führungsgehäuse der Einschiebevorrichtung
- 8: Führungskanal
- 9: Eingangsöffnung des Führungskanals
- 10: Ausgangsöffnung des Führungskanals
- 11: Eingangsöffnung des Aufnahmeraums
- 12: Längsachse des Führungskanals / des Aufnahmeraums
- 13: Stempel
- 14: Stempelkopf
- 15: Stempelstange
- 16: Reinigungsvorrichtung
- 17: Abstreifelement
- 18: Vliesring
- 19: Dosiervorrichtung
- 20: Zuführvorrichtung
- 21: Zuführstutzen der Zuführvorrichtung
- 22: Anschlussstutzen der Dosiervorrichtung
- 23: Gehäuseabschnitt

## Patentansprüche

1. Vorrichtung (6) zum Einschieben einer Einheit, die ein Abgasnachbehandlungselement (2) sowie eine das Abgasnachbehandlungselement (2) umfangsseitig umgebende, flexible Lagerungsmatte (3) umfasst, in einen Aufnahmeraum (5) eines Gehäuses (4) einer Abgasnachbehandlungsvorrichtung (1), umfassend
- ein Führungsgehäuse (7) mit einem Führungskanal (8), der eine Ausgangsöffnung (10) aufweist, die zur Anordnung in Überdeckung mit einer Eingangsöffnung (11) des Aufnahmeraums (5) des Gehäuses (4) vorgesehen ist, und
- einen Stempel (13) zum Schieben der Einheit durch den Führungskanal (8) und bis in den Aufnahmeraum (5) des Gehäuses (4),
**gekennzeichnet durch** eine Reinigungsvorrichtung (16) zur Reinigung der Wandung des Führungskanals (8), wobei die Reinigungsvorrichtung (16) ein die Wandung des Führungskanals (8) kontaktierendes Abstreifelement (17) umfasst.

2. Vorrichtung (6) gemäß Anspruch 1, **dadurch gekennzeichnet, dass** die Reinigungsvorrichtung (16) dem Stempel (13) zugeordnet ist.

3. Vorrichtung (6) gemäß Anspruch 2, **dadurch gekennzeichnet, dass** die Reinigungsvorrichtung (16) bezüglich der Einschieberichtung hinter dem Stempel (13) angeordnet ist.

4. Vorrichtung (6) gemäß einem der vorhergehenden Ansprüche, **dadurch gekennzeichnet, dass** das Abstreifelement (17) ein textiles Flächen- oder Raumgebilde (18) umfasst.

5. Vorrichtung (6) gemäß einem der vorhergehenden Ansprüche, **dadurch gekennzeichnet, dass** die Reinigungsvorrichtung (16) eine Dosiervorrichtung (19) zum Ausbringen eines Reinigungs- und/oder Schmiermittels umfasst.

6. Vorrichtung (6) gemäß den Ansprüchen 4 und 5, **dadurch gekennzeichnet, dass** die Dosiervorrichtung (19) dazu eingerichtet ist, das Reinigungs- und/oder Schmiermittel in das textile Flächen- oder Raumgebilde (18) einzubringen.

7. Vorrichtung (6) gemäß Anspruch 5 oder 6, **dadurch gekennzeichnet, dass** die Reinigungsvorrichtung (16) eine stationäre Zuführvorrichtung (20) für das Reinigungs- und/oder Schmiermittel umfasst, die in einer definierten Stellung des Stempels (13) fluidleitend mit der Dosiervorrichtung (19) verbunden ist.

8. Vorrichtung (6) gemäß einem der vorhergehenden Ansprüche, **dadurch gekennzeichnet, dass** das Führungsgehäuse (7) eine Mehrzahl von radial bezüglich der Längsachse (12) des Führungskanals (8) beweglich gelagerten Gehäuseabschnitten (23) umfasst.

9. Verfahren zur Herstellung einer Abgasnachbehandlungsvorrichtung (1), wobei mittels einer Vorrichtung (6) gemäß einem der vorhergehenden Ansprüche eine Einheit, die ein Abgasnachbehandlungselement (2) sowie eine das Abgasnachbehandlungselement (2) umfangsseitig umgebende, flexible Lagerungsmatte (3) umfasst, in einen Aufnahmeraum (5) eines Gehäuses (4) der Abgasnachbehandlungsvorrichtung (1) eingeschoben wird.

## Claims

1. Device (6) for inserting a unit, comprising an exhaust-gas aftertreatment element (2) and a flexible mounting mat (3) which circumferentially surrounds the exhaust-gas aftertreatment element (2), into a receiving space (5) of a housing (4) of an exhaust-gas aftertreatment device (1), comprising
- a guide housing (7) having a guide channel (8) which has an outlet opening (10) which is provided to be arranged so as to overlap with an inlet opening (11) of the receiving space (5) of the housing (4), and
- a ram (13) for pushing the unit through the guide channel (8) and into the receiving space (5) of the housing (4),
**characterized by** a cleaning device (16) for cleaning the wall of the guide channel (8), the cleaning device (16) comprising a wiping element (17) which contacts the wall of the guide channel (8).

2. Device (6) according to claim 1, **characterized in that** the cleaning device (16) is associated with the ram (13).

3. Device (6) according to claim 2, **characterized in that** the cleaning device (16) is arranged behind the ram (13) with respect to the direction of insertion.

4. Device (6) according to any of the preceding claims, **characterized in that** the wiping element (17) comprises a textile planar or spatial structure (18).

5. Device (6) according to any of the preceding claims, **characterized in that** the cleaning device (16) comprises a dosing device (19) for dispensing a cleaning and/or lubricating agent.

6. Device (6) according to claims 4 and 5, **characterized in that** the dosing device (19) is designed to introduce the cleaning and/or lubricating agent into the textile planar or spatial structure (18).

7. Device (6) according to either claim 5 or claim 6, **characterized in that** the cleaning device (16) comprises a stationary feed device (20) for the cleaning and/or lubricating agent, which, in a defined position of the ram (13), is fluidically connected to the dosing device (19).

8. Device (6) according to any of the preceding claims, **characterized in that** the guide housing (7) comprises a plurality of housing portions (23) which are mounted radially with respect to the longitudinal axis (12) of the guide channel (8).

9. Method for producing an exhaust-gas aftertreatment device (1), wherein by means of a device (6) according to any of the preceding claims, a unit comprising an exhaust-gas aftertreatment element (2) and a flexible mounting mat (3) which circumferentially surrounds the exhaust-gas aftertreatment element (2) is inserted into a receiving space (5) of a housing (4) of the exhaust gas aftertreatment device (1).

## Revendications

1. Dispositif (6) permettant d'insérer une unité, laquelle comprend un élément de post-traitement des gaz d'échappement (2) ainsi qu'une tresse de montage (3) flexible entourant l'élément de post-traitement des gaz d'échappement (2) côté circonférence, dans un espace de logement (5) d'un boîtier (4) d'un dispositif de post-traitement des gaz d'échappement (1), comprenant
- un boîtier de guidage (7) comportant un canal de guidage (8), lequel canal de guidage présente une ouverture de sortie (10) prévue pour l'agencement superposé à une ouverture d'entrée (11) de l'espace de logement (5) du boîtier (4), et
- un poinçon (13) permettant d'enfoncer l'unité à travers le canal de guidage (8) et jusque dans l'espace de logement (5) du boîtier (4),
**caractérisé par** un dispositif de nettoyage (16) permettant de nettoyer la paroi du canal de guidage (8), dans lequel le dispositif de nettoyage (16) comprend un élément de raclage (17) entrant en contact avec la paroi du canal de guidage (8).

2. Dispositif (6) selon la revendication 1, **caractérisé en ce que** le dispositif de nettoyage (16) est associé au poinçon (13).

3. Dispositif (6) selon la revendication 2, **caractérisé en ce que** le dispositif de nettoyage (16) est disposé derrière le poinçon (13) par rapport à la direction d'insertion.

4. Dispositif (6) selon l'une des revendications précédentes,
**caractérisé en ce que** l'élément de raclage (17) comprend une structure textile plane ou spatiale (18).

5. Dispositif (6) selon l'une des revendications précédentes,
**caractérisé en ce que** le dispositif de nettoyage (16) comprend un dispositif de dosage (19) permettant de distribuer un agent de nettoyage et/ou de lubrification.

6. Dispositif (6) selon les revendications 4 et 5, **caractérisé en ce que** le dispositif de dosage (19) est conçu pour introduire l'agent de nettoyage et/ou de lubrification dans la structure textile plane ou spatiale (18).

7. Dispositif (6) selon la revendication 5 ou 6, **caractérisé en ce que** le dispositif de nettoyage (16) comprend un dispositif d'alimentation (20) stationnaire destiné à l'agent de nettoyage et/ou de lubrification qui, dans une position définie du poinçon (13), est relié au dispositif de dosage (19) d'une manière conductrice de fluide.

8. Dispositif (6) selon l'une des revendications précédentes,
**caractérisé en ce que** le boîtier de guidage (7) comprend une pluralité de sections de boîtier (23) montées de manière mobile radialement par rapport à l'axe longitudinal (12) du canal de guidage (8).

9. Procédé permettant de fabriquer un dispositif de post-traitement des gaz d'échappement (1), dans lequel, au moyen d'un dispositif (6) selon l'une des revendications précédentes, une unité, laquelle comprend un élément de post-traitement des gaz d'échappement (2) ainsi qu'une tresse de montage (3) flexible entourant l'élément de post-traitement des gaz d'échappement (2) côté circonférence, est insérée dans un espace de logement (5) d'un boîtier (4) du dispositif de post-traitement des gaz d'échappement (1).
